(19) Europäisches Patentamt
European Patent Office
Office européen des brevets

(11) **EP 3 169 165 B1**

(12) **EUROPEAN PATENT SPECIFICATION**

(45) Date of publication and mention
of the grant of the patent:
**06.09.2023 Bulletin 2023/36**

(21) Application number: **15739265.5**

(22) Date of filing: **17.07.2015**

(51) International Patent Classification (IPC):
**A23L 19/00** (2016.01)    **A23L 33/22** (2016.01)
**A23L 2/06** (2006.01)    **A23L 2/52** (2006.01)

(52) Cooperative Patent Classification (CPC):
**A23L 2/06; A23L 2/52; A23L 19/07; A23L 33/22**

(86) International application number:
**PCT/EP2015/066392**

(87) International publication number:
**WO 2016/009038 (21.01.2016 Gazette 2016/03)**

(54) **PROCESS FOR OBTAINING CITRUS FIBER**

**VERFAHREN ZUM GEWINNEN VON ZITRUSFASER**

**PROCÉDÉ D'OBTENTION DE FIBRES D'AGRUMES**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.07.2014 EP 14177613**

(43) Date of publication of application:
**24.05.2017 Bulletin 2017/21**

(73) Proprietor: **AMC Innova Juice & Drinks, S.L.**
**30100 Espinardo (ES)**

(72) Inventors:
• **ARCAS MIÑARRO, Maria Cruz**
**E-30100 Espinardo (ES)**
• **ZACK, Yoram**
**E-30100 Espinardo (ES)**
• **GIMÉNEZ SIERRA, Teresa**
**E-30009 Murcia (ES)**

(74) Representative: **ZBM Patents - Zea, Barlocci & Markvardsen**
**Rambla Catalunya, 123**
**08008 Barcelona (ES)**

(56) References cited:
**EP-A1- 0 485 030    US-A- 5 073 397**
**US-A1- 2012 135 109**

• **R. J. REDGWELL ET AL: "Extrusion-Induced Changes to the Chemical Profile and Viscosity Generating Properties of Citrus Fiber", JOURNAL OF AGRICULTURAL AND FOOD CHEMISTRY, vol. 59, no. 15, 7 July 2011 (2011-07-07), pages 8272-8279, XP055150846, ISSN: 0021-8561, DOI: 10.1021/jf201845b**
• **GARCÍA-MÉNDEZ: "Effect of extrusion parameters on some properties of dietary fiber from lemon (Citrus aurantifolia Swingle) residues", AFRICAN JOURNAL OF BIOTECHNOLOGY, vol. 10, no. 73, 21 November 2011 (2011-11-21), XP055150936, DOI: 10.5897/AJB11.1582**
• **BRADDOCK R J; GRAUMLICH T R: "Composition of fiber from citrus peel, membranes, juice vesicles and seeds.", LEBENSMITTEL-WISSENSCHAFT UND -TECHNOLOGIE, vol. 14, no. 5, 1981, pages 229-231, XP009186634, ISSN: 0023-6438**
• **CHI-FAI CHAU ET AL: "Effects of micronisation on the characteristics and physicochemical properties of insoluble fibres", JOURNAL OF THE SCIENCE OF FOOD AND AGRICULTURE, vol. 86, no. 14, 31 December 2006 (2006-12-31), pages 2380-2386, XP055220316, GB ISSN: 0022-5142, DOI: 10.1002/jsfa.2628**

EP 3 169 165 B1

- S.-C. Wu ET AL: "Particle Size Reduction Effectively Enhances the Intestinal Health-Promotion Ability of an Orange Insoluble Fiber in Hamsters", Journal of Food Science, vol. 72, no. 8, 1 October 2007 (2007-10-01), pages S618-S621, XP055576364, US ISSN: 0022-1147, DOI: 10.1111/j.1750-3841.2007.00489.x

## Description

The present invention provides a process for obtaining fiber-rich citrus pulp with improved properties, as well as the products obtained by said process. In particular, the process allows obtaining pulp-derived citrus fiber with improved solubility, which can be useful as a food aditive in the industrial production of juices, beverages and other food products.

## BACKGROUND ART

Currently there is an increasing worldwide awareness that a healthy diet has a direct impact on longevity and life quality. Fruits and especially citrus fruits are nowadays perceived as desirable components of the diet because of their contents in nutrients and vitamins. The food industry is devoting more and more resources to the goals of developing new and healthier fruit-based products and to recover as many valuable components as possible from the processed fruits. This is enabled by the rapid development of new equipment and also by the automation and optimization of traditional processes.

Regarding the industrial processing of citrus fruits, a whole range of products can be derived. The most important step in their processing is the extraction of juice. This leads to the generation of a variety of by-products that can be subsequently processed such as pulp (purée), dried fibers, essential oils, natural pigments and others. Some of these products can be commercialized without any further processing, while others are incorporated into more complex derivatives.

In terms of juice production, orange is the most important of all citrus fruits. The consumption of orange juice is still on the rise worldwide. Although it has a high content of healthy components such as vitamins (C, B3, B1), minerals (magnesium, potassium and calcium), antioxidants and flavonoids, it has a deficient content of dietary fiber. Fiber is the indigestible portion of food derived from plants. It is mainly composed of water soluble and insoluble polysaccharides and has been linked to many health related benefits, amongst which weight loss, low cholesterol and reduced risk of colon cancer are found. Therefore, from a health perspective, it is desirable to increase the fiber content of citrus juices, beverages and other food products.

The food industry has come up with processes whereby a certain quantity of milled citrus pulp, whose fiber content is very high, is mixed with orange juice, orange soft drinks and other food derivatives in order to increase their fiber content, and therefore their beneficial properties. However, there are problems associated to the adding of fiber to juices and drinks. Dried citrus pulp carries cooked flavors which can deteriorate the mouthfeel of the juice. Alternatively, the fiber-rich citrus pulp can be semi-liquid instead of dried. In this case, it is very important for the commercial value of the final product that the added semi-liquid pulp is thoroughly solubilized with the juice and that it does not degrade its original properties. A thorough solubilization of the milled pulp in the juice minimizes the separation of the two phases (fiber and liquid) when the commercial product reaches the final consumer.

The citrus pulp fiber is usually obtained by grinding the by-products that result from the juice extraction. The by-products used in the production of citrus pulp are usually made up of the endocarp (the juice-containing partitions, also called cells), but can sometimes also contain the mesocarp (albedo). The exocarp (peel, also called flavedo) of the fruit is not used for this purpose. Typically the grinding methods rely on the use of industrial mills, especially those based on the use of stones.

There are numerous known methods and processes designed to extract fiber from vegetable sources, including citrus pulp, so that it can be incorporated into different products for human consumption, such as those disclosed in EP1784087B1, DE19943188 and others. However, all of them make use of some kind of chemical treatment of the pulp, such as exposure to organic solvents of different types and their subsequent extraction, which complicates their industrial deployment in terms of safety and waste disposal. EP 0 485 030 A1 discloses grinding citrus pulp from juice sacs via jet milling to achived a pulp having good colour and flavour and in which 60% to 90% of the particles are less than 30 microns.

Because the solubility of the citrus fiber is crucial in terms of the quality of the final product when it is mixed with juice or other food products, there exists the need to find convenient procedures to produce pulp-derived citrus fiber with improved solubility and general properties.

## SUMMARY OF THE INVENTION

Inventors have devised a process for obtaining fiber derived from citrus pulp with improved properties. In particular, it has been found a process that allows the by-product generated as a consequence of the extraction of juice from the endocarp to be processed to give a fiber-rich pulp that more easily mixes and solubilizes with any juice, such as for instance orange juice, making the incorporation of vegetable fiber more efficient in these products.

A usual procedure in the industrial processing of citrus fruits is that, once the juice has been extracted from the partitions (cells), the remaining by-products of the endocarp are typically milled with stone mills. The resulting pulp can then be mixed with juices meant for human consumption so that their content in dietary fiber is increased. However, as stated above, it is desirable to maximize the solubilisation of this pulp in the juice so that there is the minimum separation of phases when the mixture reaches the consumer. Ideally, the improvement in the solubility of pulp shall be achieved by a process that does not imply multiple steps of chemical treatment.

Inventors have surprisingly found that by combining the use of two different mills (grinders), stone mills and blade mills, the fiber-rich pulp obtained is more soluble when mixed with a juice than the pulp typically obtained by only using one mill type such as a stone mill.

Thus, a first aspect of the present invention is a process for obtaining citrus fruit fiber of particle size between 0.5 and 5 micrometers from citrus endocarp pulp comprising a grinding step wherein from 10% to 90% of the total weight of the citrus endocarp pulp is ground with a microblade grinder, the remaining weight of the citrus endocarp pulp is ground with a stone grinder and the resulting processed portions are then mixed together, wherein the microblade grinder produces particle size reduction through shearing and shredding based on the use of a rotating piece armed with cutting devices that operates at very high speeds shredding the material down to the necessary fineness and the stone grinder produces particle size reduction through attrition and compressive forces based on the use of a rotating cylinder partially filled with balls or stones which grind the material down to the necessary fineness, wherein the microblade grinder and the stone grinder operate at a speed of between 2800 and 3200 revolutions per minute and wherein the process does not include any drying steps or chemical treatment.

The process of the invention implies that the pulp to be processed is split in two portions, and processed separately in a parallel fashion. The first portion being only ground with a microblade grinder, while the second is only ground with a stone grinder. The resulting processed portions are then mixed together. As it is shown in the experimental data found below, the processed pulp generated by this process has surprisingly been found to be more soluble than the pulp generated by the single use of a stone grinder or the single use of a blade grinder. Therefore, if added to a fiber-depleted juice, the pulp generated by the process of the invention should mix more thoroughly and remain suspended for a longer time than the pulp generated by other processes. This minimizes the separation of fiber-rich pulp and juice when the mixture reaches the consumer. Remarkably, this process does not involve the use of a series of chemical treatments for improving the properties of the processed citrus pulp.

Advantageously, the process of the invention does not lead to a degradation of organoleptic properties of the pulp fiber, as the latter is not dried in any of the process steps, nor is it exposed to any chemical treatment.

A second aspect of the present invention is a ground citrus fruit fiber obtainable by a process as defined in the first aspect.

A third aspect of the present invention is a juice, a beverage or a food enriched in fiber with a ground citrus fruit obtainable by a process according to the first aspect of the invention wherein the amount of ground citrus fruit fiber is 5%-70% of the total weight.

According to claims 7-10 the juice, beverage or food may be enriched in fiber with the ground citrus fruit fiber according to the second aspect of the invention.

A fourth aspect of the invention is the use of the ground citrus fruit fiber according to the second aspect of the invention, for the preparation of a food, a beverage or a juice.

DETAILED DESCRIPTION OF THE INVENTION

For the sake of understanding, the following definitions are included.

The terms "citrus pulp" and "citrus purée" are herein used interchangeably and refer to the fibrous by-product that results from crushing the endocarp of the citrus fruit when its juice is extracted. Usually, the citrus pulp is only made up of the endocarp (partitions) of the fruit, but it can also additionally comprise the mesocarp (albedo). The pulp of the citrus fruit is normally not composed of the peel (exocarp).

The terms "microblade mill","microblade grinder","blade mill" and "blade grinder" are all here used interchangeably, and as used herein refer to a grinding machine for producing particle size reduction through shearing and shredding based on the use of a rotating piece armed with cutting devices (blades) that operates at very high speeds shredding the material down to the necessary fineness with precise increments, resulting in shreds with uniform sizes. The size of the microcut is determined by the quantity, spacing,angle and depth of exposure of the microblades, as well as on the speed of the rotating device. One such grinding machine is for instance URSCHEL COMITROL 1700, sold by Urschel.

The terms "stone mill" and "stone grinder" are here used interchangeably, and as used herein refer to a grinding machine for producing particle size reduction through attrition and compressive forces based on the use of a rotating cylinder partially filled with balls or stones which grind the material down to the necessary fineness, by friction and impact of the tumbling balls or stones. They operate by using a feed at one end of the cylinder and a discharge at the other end. One such grinding machine is for instance STONE MILL FRYMA MK-360/R.

As mentioned above, a first aspect of the present invention is a process for obtaining citrus fruit fiber of particle size between 0.5 and 5 micrometers from citrus endocarp pulp comprising a grinding step wherein from 10% to 90% of the total weight of the citrus endocarp pulp is ground with a microblade grinder, the remaining weight of the citrus endocarp pulp is ground with a stone grinder and the resulting processed portions are then mixed together, wherein the microblade grinder produces particle size reduction through shearing and shredding based on the use of a rotating piece armed with cutting devices that operates at very high speeds shredding the material down to the necessary fineness and the stone grinder produces particle size reduction through attrition and compressive forces based on the use of a rotating cylinder partially filled with balls or stones which grind the material down to the necessary fineness, wherein the microblade grinder and the stone grinder operate at a speed of between 2800 and 3200 revolutions per minute and wherein the process does not include any drying steps or chemical treatment.

The microblade grinder produces particle size reduction through shearing and shredding based on the use of a rotating piece armed with cutting devices that operates at very high speeds shredding the material down to the necessary fineness and the stone grinder produces particle size reduction through attrition and compressive forces based on the use of a rotating cylinder partially filled with balls or stones which grind the material down to the necessary fineness.

In an embodiment of the first aspect of the invention, the microblade grinder and the stone grinder operate at a speed of between 2900 and 3100 revolutions per minute.

In an embodiment of the first aspect, the microblade grinder operates at a speed of 3000 revolutions per minute, and the stone grinder operates at a speed of 2920 revolutions per minute.

In an embodiment of the first aspect, the microblade grinder operates with a depth of cut of 0.0013 inches, an opening of 0.0033 inches and a number of blades of 216, and the stone grinder is a corundum stone grinder with a granulation of 46/60.

In an embodiment of the first aspect, the microblade grinder operates with a depth of cut of 0.0013 inches, an opening of 0.0033 inches and a number of blades of 216, and the stone grinder is a corundum stone grinder with a granulation of 46/60 and medium hardness.

In an embodiment of the first aspect, the grinding step is such that from 15% to 85% of the total weight of the pulp is ground with a microblade grinder and the remaining weight of the pulp is ground with a stone grinder.

In an embodiment of the first aspect, the grinding step is such that from 20% to 80% of the total weight of the pulp is ground with a microblade grinder and the remaining weight of the pulp is ground with a stone grinder.

In an embodiment of the first aspect, the grinding step is such that from 25% to 75% of the total weight of the pulp is ground with a microblade grinder and the remaining weight of the pulp is ground with a stone grinder.

In another embodiment of the first aspect of the invention, the microblade grinder is of the type URSCHEL COMITROL 1700.

In another embodiment of the first aspect of the invention, the stone grinder is of the type STONE MILL FRYMA MK-360/R.

In another embodiment of the first aspect, the process further comprises a homogenization step.

In another embodiment of the first aspect of the invention, the homogenization process is carried out with a homogenizer of the type APV R55-54-95.

In another embodiment of the first aspect, the homogenization is carried out at a pressure from 150 to 250 bars.

In another embodiment of the first aspect, the homogenization is carried out at a pressure from 180 to 220 bars.

In another embodiment of the first aspect of the invention, the citrus fruit is orange or lemon. Other citrus fruits that can be used in the invention are grapefruit, lime, mandarine and tangerine.

As also stated above, a second aspect of the present invention is a ground citrus fruit fiber obtainable by a process as defined in the first aspect of the invention.

In an embodiment of the second aspect, the final particle size is between 2 and 5 micrometers.

As also stated above, the present application also discloses a juice, a beverage or a food enriched in fiber with a ground citrus fruit obtainable by a process according to the first aspect of the invention wherein the amount of ground citrus fruit fiber is up to 70% of the total weight (aspect falling under the scope of the invention only in as far as covered by claims 7-10).

In one example, the juice, the beverage or the food is such that the amount of ground citrus fruit fiber is up to 60% of the total weight (aspect falling under the scope of the invention only in as far as covered by claims 7-10).

In another example, the juice, the beverage or the food is such that the amount of ground citrus fruit fiber is up to 50% of the total weight (aspect falling under the scope of the invention only in as far as covered by claims 7-10).

In another example, the juice, the beverage or the food is such that the amount of ground citrus fruit fiber is up to 25% of the total weight (aspect falling under the scope of the invention only in as far as covered by claims 7-10).

According to the third aspect of the invention, the juice, the beverage or the food is such that the amount of ground citrus fruit fiber acording to claim 6 is comprised between 5%-70% of the total weight.

In another embodiment of the third aspect of the invention, the juice, the beverage or the food is such that the amount of ground citrus fruit fiber acording to claim 6 is comprised between 5%-50% of the total weight.

As stated above, also disclosed is a juice, a beverage or a food enriched in fiber with the ground citrus fruit fiber according to the second aspect of the invention (aspect falling under the scope of the invention only in as far as covered by claims 7-10).

For example, the amount of ground citrus fruit fiber is up to 70% of the total weight (aspect falling under the scope of the invention only in as far as covered by claims 7-10).

According to claims 8 or 10 the amount of ground citrus fruit fiber is comprised between 5%-50% of the total weight.

As also stated above, a fourth aspect of the invention is the use of the ground citrus fruit fiber according to the second aspect of the invention, for the preparation of a food, a beverage or a juice.

In an embodiment of the fourth aspect of the present invention, the juice is a fruit or vegetable juice.

In an embodiment of the fourth aspect of the present invention, the fruit juice is mixed with a dairy product.

In an embodiment of the fourth aspect of the present invention, the food is a snack.

The pulp "obtainable by" the process of the invention is used here to define the product by the process for obtaining it according to claim 6 and refers to the product obtainable by the process comprising the use of a microblade grinder and stone mill grinder as defined above. For the purposes of the invention, the expressions "obtainable", "obtained" and equivalent expressions are used interchangeably, and in any case, the expression "obtainable" encompasses the expression "obtained".

Throughout the description and claims the word "comprise" and variations of the word, are not intended to exclude other technical features, additives, components, or steps. Furthermore, the word "comprise" and its variations encompasses the term "consisting of". The following examples are provided by way of illustration, and they are not intended to be limiting of the present invention.

EXAMPLES

A) Material and Methods

Sample preparation

All the samples used in the experiments described are listed in Table 1 found below.

M1 is a sample of orange juice (Navelina and Navelate varieties) that has not been enriched with any fiber derived from pulp. This juice was obtained by crushing the oranges and decanting and pipetting the supernatant to allow for a proper separation.

This orange juice was mixed with fiber-rich pulp processed by the different processing methods (M2-M13), and the properties of the mixtures were tested in all cases. The pulp used to enrich the orange juice was also obtained from micronized orange cells of the variety Navelina and Navelate.

The grinders used for grinding the orange pulp were of the type URSCHEL COMITROL 1700 (blade grinder), and/or FRYMA MK-360/R (stone grinder). The microblade grider (URSCHEL COMITROL 1700) was used with the following conditions:

- Depth of cut: 0.0013 inches
- Opening: 0.0033 inches
- Number of blades: 216
- 3000 revolutions per minute

The stone grinder (FRYMA MK-360/R) was used with the following conditions:

- Made of Corundum.
- Medium granulation: 46/60. The granulation is a measurement for the size of each individual granule contained in the corundum stone, and is signified by a number, which corresponds to the mesh aperture of the sieve (number of mesh per inch). FRYMA corundum stones can be supplied in the following granulations:

  o 20, 36 coarse
  o 46, 60 medium
  o 80, 100, 120 fine.

  It has become evident from experience that the best grinding results are achieved when the granulation of the stator stone is one or maybe two granulation grades finer than that of the rotor stone. For instance mill stone 46/60 = granulation of the rotor 46, granulation of the stator 60.
- Medium hardness. The hardness of a corundum stone depends on the chemical nature and,quaility of the added binding agents. The quality is signified by capital letters: for FRYMA Corundum Stone Mills the following hardness grades can be considered:

  ◦ N to P medium hard.
  ◦ Q to U hard.

• 2920 revolutions per minute.


Table 1. List of the samples used for the comparison.

|      | Samples       | Description |
|------|---------------|-------------|
| **M1** | OJ          | Orange juice without any ground cells. |
| **M2** | Cells no /G-H | Cells, no grinding and no-H. |
| **M3** | C           | Cells ground with blade grinder, no-H. |
| **M4** | P           | Cells ground with stone grinder, no-H. |
| **M5** | Cells-H     | Cells, no grinding, but homogenized. Because of technical reasons, they cannot be processed directly with the homogenizer. |
| **M8** | 50-50       | Cells, 50% ground with blade grinder and 50% ground with stone grinder, no-H. |
| **M9** | 25P-75C     | Cells, 25% ground with stone grinder, and 75% ground with blade grinder, no-H. |
| **M10** | 75P-25C    | Cells, 75% ground with stone grinder, and 25% ground with blade grinder, no-H. |
| **M6** | C-H         | Cells ground with blade grinder, with Homogenization. |
| **M7** | P-H         | Cells ground with stone grinder, with Homogenization. |
| **M11** | 50-50-H    | Cells, 50% ground with stone grinder and 50% ground with blade grinder, with Homogenization. |
| **M12** | 25P-75C-H  | Cells, 25% ground with stone grinder and 75% ground with blade grinder, with Homogenization. |
| **M13** | 75P-25C-H  | Cells, 75% ground with stone grinder and 25% ground with blade grinder, with Homogenization. |

H- homogenization


Determination of centrifugable and suspended pulp

The used method was the one set by the International Federation of Fruit
Juice Producers (IFFJP, 1991) and the results are expressed in % of suspended pulp. The samples M2-M13 were diluted in M1, at a concentration of 10%, and subsequently were stirred (300rpm) for 30 minutes. All samples were centrifuged at 370g, 10 minutes at 22 degrees Celsius in a UNICEN centrifuge (ORTOALRESA, Madrid, Spain), and the % of suspended pulp was calculated by the equation:

$$P_s = (PC_{M1} + m_{ca}) - PC_{Mx}$$

where:

$P_s$ is the suspended pulp in sample Mx.
$PC_{M1}$ is the centrifugable pulp of the natural juice M1 after centrifugation at 370g for 10 minutes (this is a constant value, which only depends on the juice used to dilute the pulp).
$PC_{Mx}$ is the centrifugable pulp of sample Mx (values of x from 2 to 13, according to Table 1) after centrifugation.

Particle size determination.

For determination of the particle size, a NanoBrook 90Plus (Brookhaven Instruments) apparatus was used.
Dilute suspensions, on the order of 0.0001 to 1.0% v/v were prepared. A small ultrasonicator was useful in breaking up loosely-held agglomerates. Two or three mL of suspension were required to make the measurements.
Disposable, acrylic square cells were used for aqueous and simple alcohol suspensions. Just a few minutes were required for the sample and cell to equilibrate with the actively controlled temperature environment inside the NanoBrook 90Plus.

A square glass cell was available if desired and special small-volume cells were used to reduce the volume of material needed to just 50 μL or 10 μL. For aqueous samples, the 50 μL was a disposable cuvette. In all cases the sample was recoverable. For very small particles the high-sensitivity BI-APD detector was used.

Statistical analysis

All the analysis were generated by triplicate. All results are given as an average of 3 replicas +/- the standard deviation. The comparison of the averages was carried out (p<0.05) by multivariate analysis and the Duncan multiple range test. The program used for all statistical analysis was Statgraphic Plus ver. 5.1 (Statpoint Technologies Inc., Warrengton, VA).

B) Results

The goal of these experiments was basically to test whether the pulp processed by the different methods would solubilize differently with orange juice. The processed pulp with the best solubility should be less centrifugable (i.e. Pc values should be lower), and should remain more time under suspension (i.e. Ps should be higher). After centrifugation of all the mixtures, the more processed pulp there is left under suspension in the orange juice, the better.

Centrifugable pulp (Pc) and suspended pulp (Ps)

Results are found in Table 2 (no homogenization of the mixtures) and Table 3 (homogenization of the mixtures).

Table 2. Centrifugable pulp and suspended pulp in samples of orange juice enriched with processed pulp given by the different processes (Mx), before homogenization.

| Samples before homogenization | | | | |
|---|---|---|---|---|
| Samples | Pc (g) | $Pc_{theoretical}$ (g) | Ps (g) | Ps (%) |
| M1 | 8.79 ±0,22 | 9.08 | 0 | 0 |
| M2 | 19.11 ± 0.28 | 19.11 ± 0.04 | 0 | 0 |
| M3 | 17.55 ± 0.59 | 19.09 ± 0.02 | 1.54 ± 0.57 | 15.39 ± 0.61 |
| M4 | 18.09 ± 0.01 | 19.10 ± 0.04 | 1.01 ± 0.02 | 10.08 ± 0.18 |
| M9 | 17.18 ± 0.27 | 19.09 ± 0.02 | 1.91 ± 0.25 | 19.08 ± 0.23 |
| M10 | 16.83 ± 0.54 | 19.08 ± 0.00 | 2.25 ± 0.54 | 22.45 ± 0.62 |

All results are shown as a mean+/- the standard deviation.
An analysis of the results found in Table 2 reveals that before homogenization, it is found that the lowest values of centrifugable pulp are seen for samples M9 and M10, or in other words, after the mixture (of orange juice and processed pulp generated by the different methods) was centrifuged, the highest pulp still in suspension is the one corresponding to M9 and M10 (1.91 and 2.25 respectively), the processes of the invention.

Table 3. Centrifugable pulp and suspended pulp in samples of orange juice enriched with processed pulp given by the different processes (Mx), after homogenization.

| Samples after homogenization | | | | |
|---|---|---|---|---|
| Samples | Pc (g) | $Pc_{theoretical}$ (g) | Ps (g) | Ps (%) |
| M6 | 17.77 ± 0.4 | 19.18 ± 0.14 | 1.41 ± 0.54 | 13.93 ± 5.2 ab |
| M7 | 17.98 ± 0.03 | 19.12 ± 0.04 | 1.14 ± 0.01 | 11.35 ± 0.03 |
| M12 | 17.37 ± 0.73 | 19.10 ± 0.01 | 1.73 ± 0.74 | 17.26 ± 7.39 |
| M13 | 17.38 ± 0.23 | 19.08 ± 0.02 | 1.70 ± 0.21 | 17.00 ± 2.09 |

All results are shown as a mean+/- the standard deviation.
In line with the results found before homogenization, results in Table 3 show that after homogenization, it is also found that the lowest values of centrifugable pulp are seen for samples obtained by mixtures whose fiber-rich pulp was generated by the method of the invention (M12-M13). In other words, the highest content of pulp still under suspension after centrifugation is seen for samples M12 and M13 (1.73 and 1.70), the two samples where the fiber-rich pulp was processed by a combination of blade grinders and stone grinders.

Particle size

The final particle sizes determined were the following:

- For the stuff processed through the blade grinder, the final particle size was $1,17 \pm 0,015$ $\mu$m
- For the stuff processed through the stone grinder, the final particle size was $1,78 \pm 0,028$ $\mu$m
- For the whole product after homogenization, the final particle size was $1,53 \pm 0,014$ $\mu$m

REFERENCES CITED IN THE APPLICATION

EP1784087B1

DE19943188

**Claims**

1. A process for obtaining citrus fruit fiber of particle size between 0.5 and 5 micrometers from citrus endocarp pulp comprising a grinding step wherein from 10% to 90% of the total weight of the citrus endocarp pulp is ground with a microblade grinder, the remaining weight of the citrus endocarp pulp is ground with a stone grinder and the resulting processed portions are then mixed together, wherein the microblade grinder produces particle size reduction through shearing and shredding based on the use of a rotating piece armed with cutting devices that operates at very high speeds shredding the material down to the necessary fineness and the stone grinder produces particle size reduction through attrition and compressive forces based on the use of a rotating cylinder partially filled with balls or stones which grind the material down to the necessary fineness, wherein the microblade grinder and the stone grinder operate at a speed of between 2800 and 3200 revolutions per minute and wherein the process does not include any drying steps or chemical treatment, wherein the particle size is determined as set forth in the description.

2. The process according to claim 1, wherein the microblade grinder operates at a speed of 3000 revolutions per minute, and the stone grinder operates at a speed of 2920 revolutions per minute.

3. The process according to claim 2, wherein the microblade grinder operates with a depth of cut of 0.00003302m (0.0013 inches) an opening of 0.00008382m (0.0033 inches) and a number of blades of 216, and the stone grinder is a corundum stone grinder with a granulation of 46/60.

4. The process according to any one of claims 1-3, wherein from 25% to 75% of the total weight of the pulp is ground with a microblade grinder and the remaining weight of the pulp is ground with a stone grinder.

5. The process according to any one of claims 1 to 4, further comprising a homogenization step.

6. A ground citrus fruit fiber of particle size between 0.5 and 5 micrometers obtainable by a process according to any of the claims 1-5, wherein the particle size is determined as set forth in the description.

7. A beverage enriched in fiber with the ground citrus fruit fiber according to claim 6, wherein the amount of ground citrus fruit fiber is comprised between 5%-70% of the total weight.

8. The beverage according to claim 7, wherein the amount of ground citrus fruit fiber is comprised between 5%-50% of the total weight.

9. A food enriched in fiber with the ground citrus fruit fiber according to claim 6, wherein the amount of ground citrus fruit fiber is comprised between 5%-70% of the total weight.

10. The food according to claim 9, wherein the amount of ground citrus fruit fiber is comprised between 5%-50% of the total weight.

11. Use of the ground citrus fruit fiber according to claim 6 for the preparation of a food, a beverage or a juice.

12. The use according to claim 11, wherein the juice is a fruit or vegetable juice.

13. The use according to claim 12, wherein the fruit juice is mixed with a dairy product.

14. The use according to claim 11, wherein the food is a snack.


**Patentansprüche**

1. Ein Verfahren zur Gewinnung von Zitrusfruchtfaser mit einer Partikelgröße zwischen 0,5 und 5 Mikrometern aus Zitrus-Endocarp-Zellstoff, umfassend einen Mahlschritt, wobei von 10 % bis 90 % des gesamten Gewichts des Zitrus-Endocarp-Zellstoffs mit einem Mikroklingenschleifer gemahlen wird, das verbleibende Gewicht des Zitrus-Endocarp-Zellstoffs mit einer Steinmühle gemahlen wird und die resultierenden verarbeiteten Portionen dann miteinander vermischt werden, wobei der Mikroklingenschleifer durch Scheren und Zerkleinern eine Partikelgrößenreduzierung erzeugt, basierend auf der Verwendung von einem rotierenden Teil, das mit Schneidvorrichtungen ausgestattet ist, die mit sehr hohen Geschwindigkeiten arbeitet und das Material auf die erforderliche Feinheit zerkleinert, und wobei der Steinschleifer eine Partikelgrößenreduzierung durch Abrieb und Druckkräfte erzeugt, basierend auf der Verwendung von einem rotierenden Zylinder, der teilweise mit Kugeln oder Steinen gefüllt ist, welche das Material auf die erforderliche Feinheit zerkleinern, wobei der Mikroklingenschleifer und der Steinschleifer mit einer Geschwindigkeit von zwischen 2800 und 3200 Umdrehungen pro Minute arbeiten und wobei das Verfahren keine Trocknungsschritte oder chemische Behandlung umfasst, wobei die Partikelgröße wie in der Beschreibung dargelegt bestimmt wird.

2. Das Verfahren nach Anspruch 1, wobei der Mikroklingenschleifer mit einer Geschwindigkeit von 3000 Umdrehungen pro Minute arbeitet und der Steinschleifer mit einer Geschwindigkeit von 2920 Umdrehungen pro Minute arbeitet.

3. Das Verfahren nach Anspruch 2, wobei der Mikroklingenschleifer mit einer Schnitttiefe von 0,00003302 m (0,0013 Zoll), einer Öffnung von 0,00008382 m (0,0033 Zoll) und einer Anzahl von Klingen von 216 arbeitet und der Steinschleifer ein Korundsteinschleifer mit einer Körnung von 46/60 ist.

4. Das Verfahren nach einem der Ansprüche 1 bis 3, wobei von 25 % bis 75 % des gesamten Gewichts des Zellstoffs mit einem Mikroklingenschleifer gemahlen wird und das verbleibende Gewicht des Zellstoffs mit einem Steinschleifer gemahlen wird.

5. Das Verfahren nach einem der Ansprüche 1 bis 4, weiterhin umfassend einen Homogenisierungsschritt.

6. Eine gemahlene Zitrusfruchtfaser mit einer Partikelgröße zwischen 0,5 und 5 Mikrometern, die durch ein Verfahren nach einem der Ansprüche 1 bis 5 erhalten werden kann, wobei die Partikelgröße wie in der Beschreibung dargelegt bestimmt wird.

7. Ein mit der gemahlenen Zitrusfruchtfaser nach Anspruch 6 faserangereichertes Getränk, wobei die Menge an gemahlener Zitrusfruchtfaser bei zwischen 5 %-70 % des gesamten Gewichts liegt.

8. Das Getränk nach Anspruch 7, wobei die Menge an gemahlener Zitrusfruchtfaser bei zwischen 5 %- 50 % des gesamten Gewichts liegt.

9. Ein mit der gemahlenen Zitrusfruchtfaser nach Anspruch 6 faserangereichertes Lebensmittel, wobei die Menge an gemahlener Zitrusfruchtfaser bei zwischen 5 %-70 % des gesamten Gewichts liegt.

10. Das Lebensmittel nach Anspruch 9, wobei die Menge an gemahlener Zitrusfruchtfaser bei zwischen 5 %-50 % des gesamten Gewichts liegt.

11. Verwendung der gemahlenen Zitrusfruchtfaser nach Anspruch 6 zur Herstellung eines Nahrungsmittels, eines Getränks oder eines Saftes.

**12.** Die Verwendung nach Anspruch 11, wobei der Saft ein Obst- oder Gemüsesaft ist.

**13.** Die Verwendung nach Anspruch 12, wobei der Fruchtsaft mit einem Molkereiprodukt gemischt ist.

**14.** Die Verwendung nach Anspruch 11, wobei das Lebensmittel ein Snack ist.

**Revendications**

**1.** Un procédé pour obtenir des fibres d'agrumes avec une taille de particules comprise entre 0,5 et 5 micromètres à partir de pulpe d'endocarpe d'agrumes comprenant une étape de broyage dans laquelle de 10 % à 90 % du poids total de la pulpe d'endocarpe d'agrumes est broyé avec un broyeur à micro-lames, le poids restant de la pulpe d'endocarpe d'agrumes est broyé avec un broyeur à pierres et les parties traitées résultantes sont ensuite mélangées ensemble, dans lequel le broyeur à micro-lames produit une réduction de la taille des particules par cisaillement et déchiquetage sur la base de l'utilisation d'une pièce rotative armée de dispositifs de coupe qui fonctionne à des vitesses très élevées, déchiquetant le matériau jusqu'à la finesse nécessaire et le broyeur à pierres produit une réduction de la taille des particules par attrition et moyennant des forces de compression sur la base de l'utilisation d'un cylindre rotatif partiellement rempli de billes ou de pierres qui broient le matériau jusqu'à la finesse nécessaire, dans lequel le broyeur à micro-lames et le broyeur à pierres fonctionnent à une vitesse d'entre 2800 et 3200 tours par minute et dans lequel le procédé ne comprend aucune étape de séchage ou traitement chimique, dans lequel la taille des particules est déterminée tel qu'indiqué dans la description.

**2.** Le procédé selon la revendication 1, dans lequel le broyeur à micro-lames fonctionne à une vitesse de 3000 tours par minute, et le broyeur à pierres fonctionne à une vitesse de 2920 tours par minute.

**3.** Le procédé selon la revendication 2, dans lequel le broyeur à micro-lames fonctionne avec une profondeur de coupe de 0,00003302 m (0,0013 pouces), une ouverture de 0,00008382 m (0,0033 pouces) et un nombre de lames de 216, et le broyeur à pierres est un broyeur à pierres de corindon avec une granulation de 46/60.

**4.** Le procédé selon l'une quelconque des revendications 1 à 3, dans lequel de 25 % à 75 % du poids total de la pulpe est broyé avec un broyeur à micro-lames et le poids restant de la pulpe est broyé avec un broyeur à pierres.

**5.** Le procédé selon l'une quelconque des revendications 1 à 4, comprenant en outre une étape d'homogénéisation.

**6.** Une fibre d'agrumes broyée ayant une taille des particules d'entre 0,5 et 5 micromètres pouvant être obtenue par un procédé selon l'une quelconque des revendications 1 à 5, dans laquelle la taille des particules est déterminée tel qu'indiqué dans la description.

**7.** Une boisson enrichie en fibres avec la fibre d'agrumes broyée selon la revendication 6, dans laquelle la quantité de fibre d'agrumes broyée est comprise entre 5 % - 70 % du poids total.

**8.** La boisson selon la revendication 7, dans laquelle la quantité de fibre d'agrumes broyée est comprise entre 5 % - 50 % du poids total.

**9.** Un aliment enrichi en fibres avec la fibre d'agrumes broyée selon la revendication 6, dans lequel la quantité de fibre d'agrumes broyée est comprise entre 5 % - 70 % du poids total.

**10.** L'aliment selon la revendication 9, dans lequel la quantité de fibre d'agrumes broyée est comprise entre 5 % - 50 % du poids total.

**11.** Utilisation de la fibre d'agrumes broyée selon la revendication 6 pour la préparation d'un aliment, d'une boisson ou d'un jus.

**12.** L'utilisation selon la revendication 11, dans laquelle le jus est un jus de fruits ou de légumes.

**13.** L'utilisation selon la revendication 12, dans laquelle le jus de fruit est mélangé avec un produit laitier.

**14.** L'utilisation selon la revendication 11, dans laquelle l'aliment est une collation.

**EP 3 169 165 B1**

**Patent documents cited in the description**

- EP 1784087 B1
- DE 19943188
- EP 0485030 A1